(19) **Europäisches Patentamt**

**European Patent Office**

**Office européen des brevets**

(11) **EP 1 069 087 A1**

(12) **EUROPEAN PATENT APPLICATION**

(43) Date of publication:
**17.01.2001 Bulletin 2001/03**

(51) Int. Cl.$^7$: **C03C 3/11**, C03C 3/23,
C03C 3/07, C03C 4/00,
C03C 8/06, C03C 8/10

(21) Application number: **00201764.8**

(22) Date of filing: **18.05.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **15.07.1999 BE 9900487**

(71) Applicant: **De Keyzer, René**
**9250 Waasmunster (BE)**

(72) Inventor: **De Keyzer, René**
**9250 Waasmunster (BE)**

(74) Representative: **Donné, Eddy**
**Bureau M.F.J. Bockstael nv**
**Arenbergstraat 13**
**2000 Antwerpen (BE)**

(54) **Glass composition and method for filling microcavities in natural minerals**

(57) The invention concerns a glass composition having a refractive index of more than 1.75 for filling microcavities which consists of:

a) at least two substances from the group formed of oxides and hydroxides of the following metals: vanadium, gallium, germanium, zirconium, niobium, molybdenum, cadmium, indium, tin, antimony, tantalum, wolfram, thallium, lead and bismuth;
b) at least one halogenide or oxihalogenide with the general composition $MX_2$, $MX_3$, $MOX$ or $MOX_2$, whereby X is fluorine, chlorine, bromine or iodine, and M is a metal with an atomic number higher than 22;
c) between 6 and 50 mole %, calculated on the total of a glass-forming and stabilising component containing at least one oxide of silicon, boron, germanium and phosphorus or an equivalent hydro-acid thereof.

EP 1 069 087 A1

**Description**

The present invention concerns a glass composition having a refractive index of more than 1.75 for filling microcavities in natural minerals having a high refractive index, such as for example diamonds, rubies and emeralds.

Many of the above-mentioned materials have microcavities, i.e. cavities of which one of the dimensions is smaller than 100 micrometre.

These microcavities diffuse the light by means of refraction on the boundary between the air and the mineral. These microcavities can be several millimetres long and thus cause the mineral to lose its transparency and optical sparkle, as a result of which it becomes less attractive and loses its commercial value, especially as a precious stone or semiprecious stone.

The invention aims a glass composition and a method with which said microcavities can be easily filled without damaging the mineral.

This aim is reached according to the invention by means of a glass composition which:

- contains at least two substances from the group formed of oxides and hydroxides of the following metals: vanadium, gallium, germanium, zirconium, niobium, molybdenum, cadmium, indium, tin, antimony, tantalum, wolfram, thallium, lead and bismuth;

- at least one halogenide or oxihalogenide with the general composition $MX_2$, $MX_3$, $MOX$ or $MOX_2$, whereby X is fluorine, chlorine, bromine or iodine, and M is a metal with an atomic number higher than 22;

- between 6 and 50 mole %, calculated on the total of a glass-forming and stabilising component containing at least one substance from the group formed of oxides and the equivalent hydro-acids of silicon, boron, germanium and phosphorus.

This glass composition has a low static viscosity, a high liquidity above a temperature of 600°C and a slight tendency to deglaze.

A glass composition with a high refractive index which is even higher than that of diamond is described in American patent No. 2.853.393. This known composition consists of a mixture of bismuth oxide and lead oxide and possibly another oxide from the group containing among others thallium oxide and tantalum oxide, and a small amount of or none at all of a glass-forming component such as among others silicon oxide, boron oxide, germanium oxide and phosphorus oxide.

The use of halogenides instead of oxides is advised against, and the amounts of glass-forming components are very small. The viscosity of this composition is rather large and suitable for manufacturing small precious stones resembling diamonds, in particular pearls, and as a consequence it is not fit for filling microcavities.

A similar glass composition to be applied for the manufacturing of electronic circuits or components therefor and which contains lead oxide, bismuth oxide, wolfram oxide and vanadium oxide, silicon oxide and boron oxide, but no halogenide is also known from American patent No. 3.480.566. This composition has a far too high viscosity, which makes it not fit either for filling microcavities in minerals with a high refractive index.

A glass composition which does contain halogenides such as lead fluoride, apart from metal oxides and a glass-forming component such as barium oxide, is described in British patent No. 1.306.727. If the composition contains several metal oxides, these are, apart from lead oxide: zinc oxide, barium oxide, aluminium oxide, cobalt oxide, samarium oxide, calcium oxide or strontium oxide, and thus other oxides than according to the invention.

Moreover, this known glass composition is a solder glass which melts at a temperature lower than 350°C and which is designed for protecting semiconductor elements. As this glass composition cools off, it becomes turbid and thus opaque, and it shows a tendency to deglaze. The composition cannot realise the aim of the invention.

The amount of glass-forming and stabilising component is preferably smaller than 40 mole %.

The metal of the halogenide or oxihalogenide is preferably lead, bismuth or thallium.

The invention also concerns a method for filling microcavities in natural minerals with a high refractive index, characterised in that a glass composition according to any of the preceding embodiments according to the invention is provided in a microcavity in a natural mineral in melted form.

It is preferably provided at a temperature higher than 700°C and even higher than 800°C.

In order to avoid air bells, it may be necessary to fill the microcavity at an underpressure, for example under a pressure smaller than 0.01 bar.

In order to better explain the characteristics of the invention, the following preferred embodiments of a glass composition and of a method for filling microcavities in natural minerals according to the invention are described as an example only without being limitative in any way.

A glass composition according to the invention for filling microcavities in natural minerals mainly consists of:

a) a mixture of two or several of the following substances: vanadium oxide, gallium oxide, germanium oxide, zirconium oxide, niobium oxide, molybdenum oxide, cadmium oxide, indium oxide, tin oxide, antimony oxide, tantalum oxide, wolfram oxide, thallium oxide, lead oxide, bismuth oxide, vanadium hydroxide, gallium hydroxide, germanium hydroxide, zirconium hydroxide, niobium hydroxide, molybdenum hydroxide, cadmium hydroxide, indium hydroxide, tin hydroxide, antimony hydroxide, tantalum hydroxide, wolfram hydroxide, thallium hydroxide, lead hydroxide and bismuth hydroxide;

b) one or several halogenides or oxihalogenides with the general composition $MX_2$, $MX_3$, $MOX$ or $MOX_2$, whereby X is fluorine, chlorine, bromine or iodine, and M is a metal with an atomic number higher than 22, in particular lead, bismuth or thallium; and thus for example $PbF_2$, $PbCl_2$, $PbBr_2$, $PbI_2$, $PbOF$, $PbOCl$, $PbOBr$, $BiF_3$, $BiCl_3$, $BiBr_3$, $Tl_2F_3$, $TL_2CL_3$, etc.

c) between 6 and 50 mole %, and preferably even between 6 and 40 mole %, calculated on the total of a glass-forming and stabilising component containing at least one oxide of silicon, boron, germanium oxide or phosphorus or an equivalent hydro-acid thereof, such as for example boric acid or silicic acid.

The thus obtained glass composition is colourless, but can be coloured by adding very small amounts of natural inorganic pigments such as for example NiO, $Fe_2O_3$, CoO, MnO, $Cr_2O_3$.

In order to fill a microcavity in a natural mineral such as a diamond in an almost invisible way, the components of the above-mentioned composition are mixed homogeneously and melted in an atmospheric furnace at temperatures between 850 and 1100°C until a homogenous melt is obtained.

The required amount of melt may possibly be suddenly cooled by a large amount of ice-cold water, after which the glass fragments are dried in a furnace at about 50°C and they are stored.

The glass composition is provided in the microcavity at a temperature higher than 600°C.

In most cases, it is advantageous to provide the melted composition at a temperature above 800°C, and preferably in a closed room in which prevails an underpressure, for example a pressure lower than 0.01 bar.

The invention will be further illustrated by means of the following practical examples.

Six mixtures of 50 g were made with a glass composition as represented in the following table, and they were homogeneously mixed and melted in kyanised melting pots for 90 minutes at 1000°C. In the following table, the amounts have been reduced to a total of 100 g for each composition.

| Composition | 1 | 2 | 3 | 4 | 5 | 6 |
|---|---|---|---|---|---|---|
| | | | | | | |
| Metal oxides | | | | | | |
| PbO | 50 | 50 | 46 | 50 | 46 | 24 |
| $Bi_2O_3$ | 43 | 43 | 41 | 43 | 41 | 26 |
| Halogenide | | | | | | |
| $PbF_2$ | 0 | 4 | 0 | 0 | 0 | 0 |
| $PbCl_2$ | 4 | 0 | 8 | 0 | 0 | 20 |
| $BiCl_3$ | 0 | 0 | 0 | 4 | 8 | 22 |
| Glass-forming component | | | | | | |
| $SiO_2$ | 1 | 1 | 1 | 1 | 1 | 4 |
| $H_3BO_3$ | 2 | 2 | 2 | 2 | 2 | 4 |
| Total mole % | 9.3 | 9.1 | 9.5 | 9.3 | 9.5 | 23.4 |
| | | | | | | |
| Refractive index | 2.32 | 2.35 | - | - | 2.24 | 2.01 |

In order to measure the refractive index, slices of glass having a diameter of about 2 cm and a thickness of about 3 mm were cast on a metal plate. The refractive index n was determined at room temperature by measuring the total volume of reflected light Ir of the slices in the air, perpendicular to the surface, according to the following equation:

$$Ir = (n-1)^2 / (n+1)^2$$

The surface of the slices possibly may have been polished beforehand. The refractive indexes represented in the table indicate that, by means of a glass composition according to the invention, depending on the choice and the amounts of the components, said refractive index can be selected. In the given examples, it varies from 2.1 to 2.35.

For the six compositions, the transparency was measured after the liquid composition had suddenly been cooled in water until it had reached the ambient temperature. In all cases, the composition was perfectly transparent and colourless.

This transparency depends on the tendency to deglaze, which as a consequence is relatively small for the examples.

The viscosity of the melted glass composition was measured by putting an L-shaped rod with a length of 50 cm and a thickness of 2 mm in a furnace, by keeping it at 900°C for 30 seconds and by subsequently immersing it in the melted composition at a depth of 2 cm and during 15 seconds, by removing it from the composition at a normal speed of 1 cm per second, and by finally cooling it in the air.

The thickness of the film on the rod was measured. The thinner the film, the lower the viscosity. A thickness of less than 500 micrometre was regarded as a low viscosity, a thickness between 500 and 1000 micrometre as a neutral viscosity, a thickness between 500 and 1000 micrometre as a high viscosity and a thickness of more than 2000 micrometre as very viscous.

The six compositions represented in the table had a low viscosity in melted condition.

A seventh glass composition according to the invention was formed by replacing No. 6 $Bi_2O_3$ in the composition by $Tl_2O_3$. This composition was kept at a temperature of 1100°C for 90 minutes, however, in an atmospheric furnace.

This seventh glass composition also had a good viscosity, a high transparency and a neutral colour.

For comparison, some glass compositions are represented in the following table which are not according to the invention.

Composition No. 8 is one of the glass compositions published in American patent No. 3.480.566. The viscosity was clearly too high.

Glass composition No. 9 was according to one of the examples of British patent No. 1.306.727, but it was unstable. It deglazed and became opaque and yellow as it cooled down, as a result of which it was impossible to measure the refractive index.

| Composition | 8 | 9 | 10 | 11 | 12 | 13 |
|---|---|---|---|---|---|---|
|  |  |  |  |  |  |  |
| Metal oxides |  |  |  |  |  |  |
| PbO | 52 | 83 | 52 | 50 | 48 | 34 |
| $Bi_2O_3$ | 45 | 0 | 46 | 50 | 46 | 28 |
| Halogenide |  |  |  |  |  |  |
| $PbF_2$ | 0 | 7.0 | 0 | 0 | 0 | 0 |
| $PbCl_2$ | 0 | 0 | 0 | 0 | 0 | 8 |
| Glass-forming component |  |  |  |  |  |  |
| $SiO_2$ | 1 | 2 | 0 | 0 | 0 | 10 |
| $H_3BO_3$ | 2 | 0 | 2 | 0 | 2 | 20 |
| Total mole % | 9.3 | - | 4.9 | 0 | 5.0 | 58.4 |
|  |  |  |  |  |  |  |
| Refractive index | 2.35 | - | - | - | - | <1.8 |

Glass composition No. 10 had no glass-forming component and was opaque, as a result of which no refractive index could be measured.

Glass composition No. 11 contained no halogenide and was yellow and opaque.

Glass composition No. 12 contained less than 6 mole % of glass-forming component, as a result of which it was opaque after it had been cooled off.

Finally, glass composition No. 13 contained more than 50 mole % of glass-forming and stabilising component, as a result of which the composition became very viscous and the refractive index was smaller than 1.8, and thus too low for the aimed application.

From what precedes becomes clear that the glass compositions No. 1 to No. 6 are fit to be used for filling microcavities. This filling is done as follows:

100 grams of the already melted and re-hardened glass composition No. 1 was put in a kyanised melting pot and melted again in an atmospheric furnace at a temperature of 900°C and it was homogenised for 60 minutes.

In a diamond of 0.62 carat cut in the shape of a brilliant and having a diameter of 5.5 mm, microcavities were detected by means of a light microscope with backlight and a 5 to 75 times enlargement.

A major microcavity with a thickness of 10 micrometre, a length of 2000 micrometre and a depth of 1000 micrometre became visible through the table of the brilliant. This microcavity looked white and opaque and drastically reduced the sparkle.

The diamond was placed in a basket and immersed in the above-mentioned bath containing the glass composition at 900°C for 10 minutes. After it had been removed from the basket, the diamond was suddenly cooled in water at ambient temperature.

The excess glass composition was removed from the surface of the diamond by dissolving it in nitric acid, after which the diamond was washed in water.

The diamond was examined again by means of the above-mentioned microscope. The transparency of the microcavity had been considerably increased, and the opaque white zone had disappeared.

Thus, glass composition No. 1 was capable of filling the microcavity and of eliminating the refraction on the contact surface with the air, as a result of which the sparkle had been considerably improved.

According to the scale of the 'Hoge Raad for the Diamantnijverheid van Antwerpen' (the Antwerp council for the diamond industry), the brightness of the diamond had been increased from less than P3 to P1.

According to a variant of the above-described method, the melting pot with the glass composition No. 1 was placed in a vacuum chamber which was put in the furnace.

After the melting, the basket with the above-mentioned diamond was fixed to a manipulator which had been erected in the vacuum chamber, after which the latter was closed.

For 10 minutes, air was pumped out of the vacuum chamber until the pressure therein was lower than 0.01 bar.

By means of the above-mentioned manipulator, the basket with the diamond was immersed in the melted glass composition for 5 minutes.

Then, the underpressure in the vacuum chamber was interrupted, and the basket was removed from the glass composition and suddenly cooled in water.

The excess composition was removed here also by means of nitric acid, after which the diamond was washed.

A microscopic examination indicated that the sparkle and transparency were even better still than in the previous case. According to the scale of the Antwerp council for the diamond industry, the brightness of the diamond had been even increased to SI1. The filled microcavity was even no longer visible to the naked eye.

By filling under reduced pressure, the result in the end product was considerably improved.

The above-mentioned metal oxides can be replaced by corresponding hydroxides, whereas the oxides of the glass-forming component can also be replaced by equivalent hydro-acids.

For the latter component, however, it has been proved to be advantageous if it contains at least silicon oxide.

The glass composition is particularly suitable for filling microcavities in precious stones and semiprecious stones, whereby, by selecting the right components and amounts within the scope of the invention, the refraction index of the glass composition can be adjusted to that of the precious stone or semiprecious stone. Preferably, this precious stone or semiprecious stone contains less than 1 vol. % of microcavities.

The invention is by no means limited to the above-described embodiments; on the contrary, such a glass composition and method for filling microcavities in natural minerals can be made in all sorts of variants while still remaining within the scope of the invention.

## Claims

1. Glass composition having a refractive index of more than 1.75 for filling microcavities in natural minerals having a high refractive index, such as for example diamonds, rubies and emeralds, characterised in that it contains:

a) at least two substances from the group formed of oxides and hydroxides of the following metals: vanadium, gallium, germanium, zirconium, niobium, molybdenum, cadmium, indium, tin, antimony, tantalum, wolfram, thallium, lead and bismuth;

b) at least one halogenide or oxihalogenide with the general composition $MX_2$, $MX_3$, MOX or $MOX_2$, whereby X is fluorine, chlorine, bromine or iodine, and M is a metal with an atomic number higher than 22;

c) between 6 and 50 mole %, calculated on the total of a glass-forming and stabilising component containing at least one oxide of silicon, boron, germanium and phosphorus or an equivalent hydro-acid thereof.

2. Glass composition according to claim 1, characterised in that, as one of the substances mentioned under a), it contains lead oxide or lead hydroxide.

3. Glass composition according to claim 2, characterised in that it contains lead oxide or lead hydroxide and bismuth oxide or bismuth hydroxide.

4. Glass composition according to any of the preceding claims, characterised in that the amount of glass-forming and stabilising component is smaller than 40 mole %.

5. Glass composition according to any of the preceding claims, characterised in that it contains at least silicon oxide or silicic acid as a glass-forming component.

6. Glass composition according to any of the preceding claims, characterised in that the metal of the halogenide or oxihalogenide is lead, bismuth or thallium.

7. Method for filling microcavities in natural minerals with a high refractive index, characterised in that a glass composition according to any of claims 1 to 6 is provided in a microcavity in a natural mineral in melted form.

8. Method according to claim 7, characterised in that it is provided at a temperature higher than 700°C.

9. Method according to claim 8, characterised in that the melted glass composition is provided at a temperature higher than 800°C.

10. Method according to any of claims 7 to 9, characterised in that the glass composition is provided by immersion in a melt of this glass composition.

11. Method according to any of claims 7 to 10, characterised in that the microcavity is filled at underpressure.

12. Method according to claim 11, characterised in that the microcavity is filled at a pressure smaller than 0.01 bar.

13. Natural precious stone, in particular a diamond, or semiprecious stone with maximally 1 vol. % of microcavities, characterised in that at least one microcavity is filled with a glass composition according to any of claims 1 to 6.

European Patent
Office

**EUROPEAN SEARCH REPORT**

Application Number

EP 00 20 1764

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 1 515 042 A (JENAER GLAS SCHOTT GEN VEB) 21 June 1978 (1978-06-21) * claim 1 * | 1,2,4-6 | C03C3/11 C03C3/23 C03C3/07 C03C4/00 C03C8/06 C03C8/10 |
| D,X | US 2 853 393 A (W.R. BECK ET AL.) 23 September 1958 (1958-09-23) * column 3, line 74 - column 4, line 3 * | 1-13 | |
| X | WO 95 21137 A (OKAMOTO MIKIO ;UEDA MOTOI (JP); HASEGAWA TAKESHI (JP); NIPPON KOGA) 10 August 1995 (1995-08-10) * the whole document * | 1,2,4-6 | |
| P,X | & US 5 969 861 A (M. UEDA ET AL.) 19 October 1999 (1999-10-19) | 1,2,4-6 | |
| A | US 4 299 608 A (MACEDO PEDRO B ET AL) 10 November 1981 (1981-11-10) * claims * | 1-13 | |

TECHNICAL FIELDS
SEARCHED      (Int.Cl.7)

C03C

The present search report has been drawn up for all claims

| Place of search | Date of completion of the search | Examiner |
|---|---|---|
| THE HAGUE | 2 November 2000 | Reedijk, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 00 20 1764

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2000

| Patent document cited in search report | | Publication date | Patent family member(s) | | Publication date |
|---|---|---|---|---|---|
| GB 1515042 | A | 21-06-1978 | DE | 2603450 A | 16-09-1976 |
| | | | FR | 2303770 A | 08-10-1976 |
| US 2853393 | A | 23-09-1958 | BE | 513226 A | |
| | | | CH | 315266 A | 15-08-1956 |
| | | | DE | 855766 C | |
| | | | FR | 1046718 A | 08-12-1953 |
| | | | GB | 710357 A | |
| | | | IT | 479912 A | |
| WO 9521137 | A | 10-08-1995 | JP | 7215732 A | 15-08-1995 |
| | | | JP | 7281024 A | 27-10-1995 |
| | | | DE | 19580247 T | 21-03-1996 |
| | | | US | 5969861 A | 19-10-1999 |
| US 4299608 | A | 10-11-1981 | US | 4183620 A | 15-01-1980 |
| | | | CA | 1083183 A | 05-08-1980 |
| | | | DE | 2758897 A | 13-07-1978 |
| | | | FR | 2376084 A | 28-07-1978 |
| | | | GB | 1554119 A | 17-10-1979 |
| | | | IT | 1092175 B | 06-07-1985 |
| | | | JP | 1511116 C | 09-08-1989 |
| | | | JP | 62052136 A | 06-03-1987 |
| | | | JP | 63062454 B | 02-12-1988 |
| | | | JP | 1395650 C | 24-08-1987 |
| | | | JP | 53102324 A | 06-09-1978 |
| | | | JP | 62000858 B | 09-01-1987 |
| | | | NL | 7714580 A | 04-07-1978 |
| | | | SE | 430685 B | 05-12-1983 |
| | | | SE | 7713981 A | 01-07-1978 |
| | | | US | 4188198 A | 12-02-1980 |

EPO FORM P0459

For more details about this annex : see Official Journal of the European Patent Office, No. 12/82